# EUROPEAN PATENT APPLICATION

(11) **EP 4 216 395 A1**
(43) Date of publication of application: **26.07.2023**
(21) Application number: 22215695.2
(22) Date of filing: 21.12.2022
(51) Int. Cl.: H02J 3/38

(54) **DYNAMIC HOSTING CAPACITY ANALYSIS FRAMEWORK FOR DISTRIBUTION SYSTEM PLANNING**

(30) Priority: 24.01.2022 US 202217582299
(71) Applicant: Hitachi, Ltd., Tokyo 100-8280 (JP)
(72) Inventor: YE, Yanzhu, 95054 Santa Clara (US); YANG, Bo, 95054 Santa Clara (US); CHONGFUANGPRINYA, Panitarn, 95054 Santa Clara (US); ABE, Masanori, 95054 Santa Clara (US)
(74) Representative: Mewburn Ellis LLP

(57) **Abstract**

Example implementations described herein involve a generic dynamic time-series hosting capacity analysis framework, which take into account distributed energy resources (DERs) dynamics and system dynamics. The example implementations described herein can further improve the computational efficiency and accuracy of hosting capacity analysis process. Example implementations can involve systems and methods that receive data input comprising system profiles and topology information of a distribution system having a plurality of DER nodes in an interconnect; execute feeder topology analysis on the topology information to generate output analysis; execute scenario management on the system profiles to generate simulation scenario sets; and load and execute a simulation flow from the simulation scenario sets and the output analysis.

## Description

### BACKGROUND

### Field

The present disclosure is generally directed to distributed energy resources (DERs) and more specifically, to providing a dynamic hosting capacity analysis framework for distribution system planning.

### Related Art

The integration of distributed energy resources (DERs) into distribution systems, especially photovoltaics (PVs), has grown significantly due to continued support of green energy policies, regulation pushes, technology innovations, and continuous cost reductions, and so on. The high-penetration of DERs in the distribution network has brought various challenges to traditional distribution system operation (e.g. over-voltage, reverse power flow, protection malfunction, and so on). So, there are emerging needs for advanced analytical tools to perform comprehensive impact analysis of DER integration on the distribution systems in both the planning and the operation phase, which can help ensure the system operation safety and reliability.

Feeder hosting capacity analysis (HCA) can be an important tool to determine the maximum allowable DERs (e.g. PV) installation capacity that can be accommodated on a specific distribution feeder without causing any adverse impact on existing grid infrastructures while considering certain performance indexes.

However, when facing excessive penetration of renewable energy as well as more complicated distribution system dynamics, the traditional implementation of HCA methodologies may be insufficient or computationally inefficient. Feeder HCA should also be re-calculated over time when the feeder system, loading, or component status changes.

Further, there is still no consensus or standard codes to define the standardized procedures to quantify hosting capacities per location per feeder.

### SUMMARY

Feeder hosting capacity analysis (HCA) has been considered as a useful analysis and planning means to evaluate the system impacts when high-penetration level of DERs, especially PVs, are integrated into distribution feeders. There exist different types of HCA methodologies to determine the maximum allowable installation capacity that can be accommodated on specific distribution feeder without causing any violations on existing grid infrastructures (e.g. iterative-based, streamlined and stochastic-based, and so on).

In an example involving PVs, the PVs are directly modelled and integrated on the distribution system at selected locations with certain generation profiles. Power flow simulations are usually performed by iteratively increasing PV penetration in user-defined steps. Different operation limits are checked at each iteration until a violation of system performance index occurs and then the hosting capacity can be obtained. During these iterative simulations, the stochastic-based method handles the uncertainty of PV deployment and PV power generation, and so on. However, a large number of scenarios are needed to obtain comprehensive assessment results. The computational accuracy of this method depends on the required solution accuracy and the number of simulation scenarios.

There exist various challenges or high-level requirements when a system-wide dynamic HCA needs to be designed, that will keep the balance between computational complexity and solution accuracy. Firstly, there is the need to consider the impact of DER dynamics. DERs are mostly inverter-based resources, and present a variety of dynamic characteristics which may directly affect the allowable integration capacities on feeder system. Traditional streamlined or snap-shot HCA methods cannot fully address this issue.

Secondly, there is a need to consider the impact of time-dependent system dynamics. These time-dependent or time-correlated system dynamics comes from many aspects, including varying load profile, fluctuating renewable power generation, smart control device dynamic response, system topology changes, and so on.

Thirdly, there is a need to facilitate a flexible framework to interface with real-world measurements or forecasting data into the HCA. Such frameworks hitherto do not exist in the related art.

Fourthly, there is a need to be computationally efficient enough to perform a system-wide HCA which covers all potential scenarios.

Finally, there is a need to facilitate the design of efficient and flexible performance indices to well present time-dependent system dynamic behavior.

To address the needs above, aspects of the present disclosure involve a method, which can include receiving data input involving system profiles and topology information of a distribution system comprising a plurality of distributed energy resource (DER) nodes in an interconnect; executing feeder topology analysis on the topology information to generate output analysis; executing scenario management on the system profiles to generate simulation scenario sets; and loading and executing a simulation flow from the simulation scenario sets and the output analysis.

Aspects of the present disclosure involve a system, which can include means for receiving data input involving system profiles and topology information of a distribution system comprising a plurality of distributed energy resource (DER) nodes in an interconnect; means for executing feeder topology analysis on the topology information to generate output analysis; means for executing scenario management on the system profiles to generate simulation scenario sets; and means for loading and executing a simulation flow from the simulation scenario sets and the output analysis.

Aspects of the present disclosure involve a computer program, which can include instructions involving receiving data input comprising system profiles and topology information of a distribution system comprising a plurality of distributed energy resource (DER) nodes in an interconnect; executing feeder topology analysis on the topology information to generate output analysis; executing scenario management on the system profiles to generate simulation scenario sets; and loading and executing a simulation flow from the simulation scenario sets and the output analysis. The instructions can be stored on a non-transitory computer readable medium and executed by one or more processors.

A management apparatus configured to manage a distribution system over a network, the distribution system comprising a plurality of distributed energy resource (DER) nodes in an interconnect, which can involve a processor, configured to receive data input comprising system profiles and topology information of a distribution system comprising a plurality of distributed energy resource (DER) nodes in an interconnect; execute feeder topology analysis on the topology information to generate output analysis; execute scenario management on the system profiles to generate simulation scenario sets; and load and execute a simulation flow from the simulation scenario sets and the output analysis.

### BRIEF DESCRIPTION OF DRAWINGS

FIG. 1 illustrates the high-level diagram of the HCA framework, in accordance with an example implementation.
FIG. 2(A) illustrates the detailed schematic diagram of the proposed generic dynamic HCA framework, in accordance with an example implementation.
FIG. 2(B) illustrates an example of the topology mapping, in accordance with an example implementation.
FIG. 3 illustrates the feeder topology analysis process which will generate cluster sets of system nodes, in accordance with an example implementation.
FIG. 4 illustrates the general workflow for the feeder node clustering, in accordance with an example implementation.
FIG. 5 illustrate the general procedure of scenario management, in accordance with an example implementation.
FIG. 6 illustrates the diagram of the dynamic performance evaluation mechanism, in accordance with an example implementation.
FIG. 7 illustrates the flowchart for the dynamic hosting capacity analysis process, in accordance with an example implementation.
FIG. 8 illustrates a system involving a plurality of DER nodes to a management apparatus, in accordance with an example implementation.
FIG. 9 illustrates an example computing environment with an example computer device suitable for use in some example implementations.

### DETAILED DESCRIPTION

The following detailed description provides details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of ordinary skill in the art practicing implementations of the present application. Selection can be conducted by a user through a user interface or other input means, or can be implemented through a desired algorithm. Example implementations as described herein can be utilized either singularly or in combination and the functionality of the example implementations can be implemented through any means according to the desired implementations.

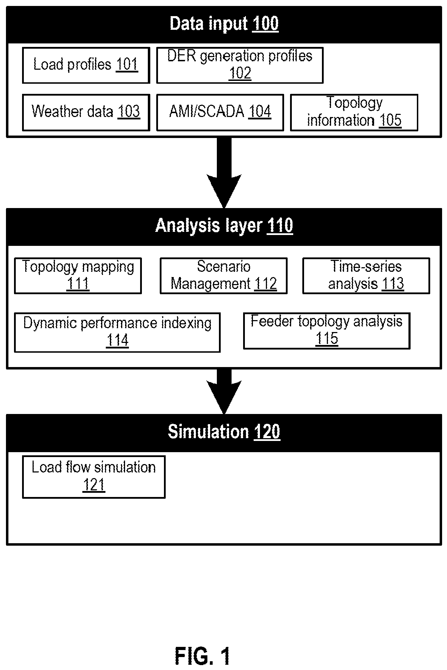

Example implementations described herein involve a generic, dynamic time-series Hosting Capacity Analysis framework which fully address the above challenges or requirement mentioned herein. FIG. 1 illustrates the high-level diagram of the HCA framework, in accordance with an example implementation.

With regards to data input 100, different data sources can be interfaced with this generic analytical framework. Different type of data sources feed into different analytical modules. For example, the real-world measurements for distribution network, including sensor measurements, metering data, system topology status, and so on, can be fed into a topology mapping module for feeder system topology updates. Examples of input data can involve, but are not limited to, load profiles 101, DER generation profiles 102, Weather data 103, advanced metering infrastructure/ supervisory control and data acquisition (AMI/SCADA) 104, and topology information 105.

Analysis layer 110 can involve a variety of analytical modules to generate updated feed models, generate representative simulation scenarios, propose appropriate dynamic performance indices, and/or perform feeder topology analysis to reduce the searching dimension. Analysis layer 110 can involve analysis modules that can involve, but are not limited to, topology mapping 111, scenario management 112, time-series analysis 113, dynamic performance indexing 114, and feeder topology analysis 115.

With regards to the simulation layer 120, the time-series load flow simulation is conducted by load flow simulator 121, which simulates the time-dependent system dynamic behaviors. Further, the dynamic performance indices are calculated along time-series simulation to detect any system violation.

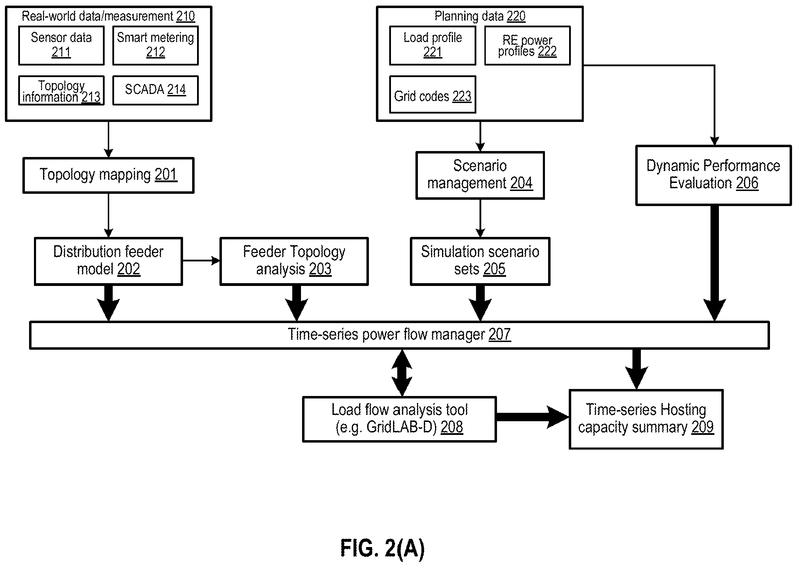

FIG. 2(A) illustrates the detailed schematic diagram of the proposed generic dynamic HCA framework, in accordance with an example implementation.

With regards to the load flow analysis tool 208, on the bottom layer, the HCA is supported by quasi static time-series (QSTS) simulation, which can run using different available power flow tools, e.g. GridLAB-D, OpenDSS, and so on, or scripts developed in-house. The time-series simulation can provide an accurate estimation of the system status.

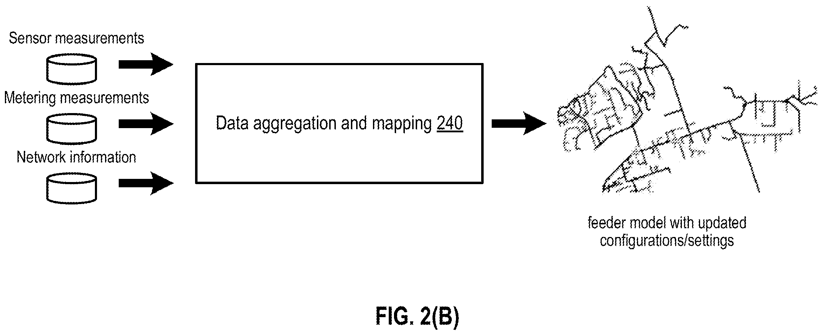

For the topology mapping 201, this function can be optional in this framework depending on the desired implementation. The real-world or on-site measurement data 210 when available (e.g. sensor measurements 211, metering data 212, updated system topology status 213, SCADA 214, and so on) can be fed into this generic HCA framework to update or calibrate the distribution feeder model 202 through the topology mapping module 201. The HC value will reflect the mostly updated feeder system status, especially when there are significant topology changes or upgrades in the feeder system. FIG. 2(B) illustrates an example of the topology mapping, in accordance with an example implementation. As illustrated in FIG. 2(B) the topology mapping 201 intakes data such as sensor measurements, metering measurements, and network information. Such input data is provided to data aggregation and mapping 240 which then conducts a topology update, equipment setting update, control device status update, load profile update, and so on for the visual interface, the result of which can be a feeder model with updated configurations/settings as illustrated in FIG. 2(B).

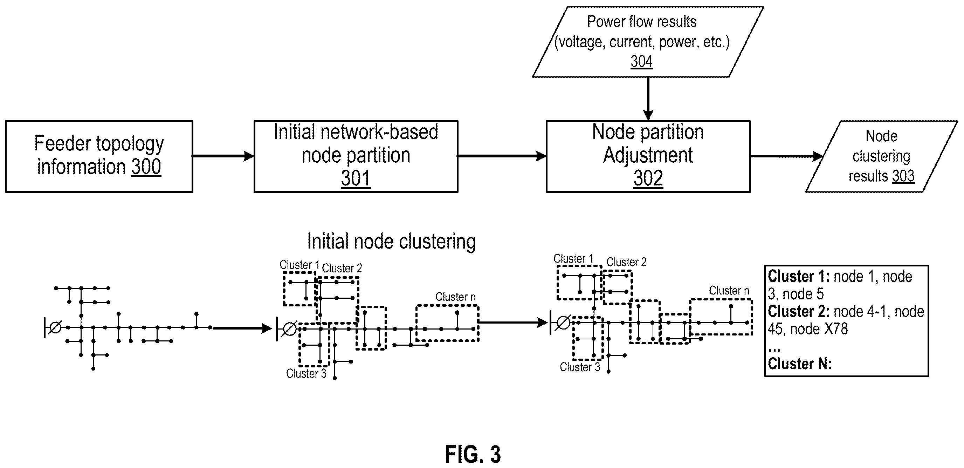

FIG. 3 illustrates the feeder topology analysis process which will generate cluster sets of system nodes, in accordance with an example implementation. With regards to the feeder topology analysis 203, in most hosting capacity analysis methodologies, the integration locations of the DERs are not pre-defined, considered as random variables. The random deployment of PVs across the entire system will generate massive testing scenarios. The feeder topology analysis module 203 is mainly to group or divide the feeder nodes onto different clusters based on their similar characteristics on DER system integration. The node clustering can help reduce the searching dimension for potential PV deployment locations given the assumption that the clustered nodes usually has similar integration impact on the system.

There are two steps of clustering or partition in FIG. 3; the initial feeder node partition/clustering 301, and the node partition adjustment 302, to which feeder topology information 300 is provided to generate node clustering results 303. The general clustering workflow is similar, which is to group system nodes into clusters based on the similarity of certain specific parameters.

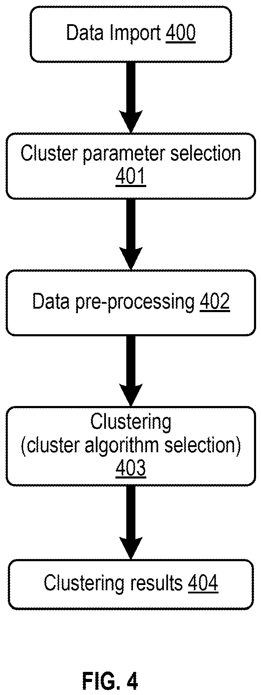

FIG. 4 illustrates the general workflow for the feeder node clustering, in accordance with an example implementation. In the general workflow for the feeder node clustering, the data is imported at 400, wherein cluster parameter selection 401 is conducted. Once the parameters are selected, then data preprocessing 402 is conducted to pre-process the data into the appropriate features. After which, clustering 403 is conducted according to the selected clustering algorithm. The clustering results 404 is then provided.

The difference between the initial partition 301 and the node partition 302 in FIG. 3 mainly comes from the parameter selection. For the initial feeder node partition or clustering 301, the initial system network information is applied as parameter input, which includes node electrical distance from feeder head or substation, located feeder branches, voltage level, serving load level, and so on in accordance with the desired implementation. For the clustering algorithm, the basic k-means algorithm, along with different variations, e.g. K-medoids, k-medians, and so on in accordance with the desired implementation, can be considered for the initial node clustering.

At 302, the initial node clustering or partition based on initial network topology information from 301 will be re-evaluated repeatedly along with the continuous power flow simulation and hosting capacity analysis from the power flow results 304. The node clustering output will be updated by the new results from the iterative power flow simulation and hosting capacity analysis. Table 1 below lists the possible clustering parameters.

**Table 1: Clustering parameters**

| Parameter | Description |
|---|---|
| *Dist* | The node distance from feeder head or substation |
| *V* | Node nominal voltage |
| *ID* | Feeder branch ID |
| *dVldP* | Sensitivity of node voltage due to integrating DER size (active power), updated along with power flow simulation |
| *dV*/*dQ* | Sensitivity of node voltage due to integrating DER size (reactive power), updated along with power flow simulation |

With regards to the scenario management 204, in order to represent the stochastic nature of the system load profiles and PV generation profiles, a massive number of simulation scenarios needs to be randomly generated. Each simulation scenario usually refers to one set of randomly-generated system load profiles and PV generation data to be applied on the feeder model for simulation study. However, many of those randomly generated scenarios provide repetitive information, such that performing simulations on each of these scenarios make it computationally inefficient.

The scenario management module 204 provides the capability to reduce scenario repetitiveness, and to only generate representative simulation scenarios for hosting capacity analysis, which will greatly reduce the number of simulation scenarios to be simulated and analyzed.

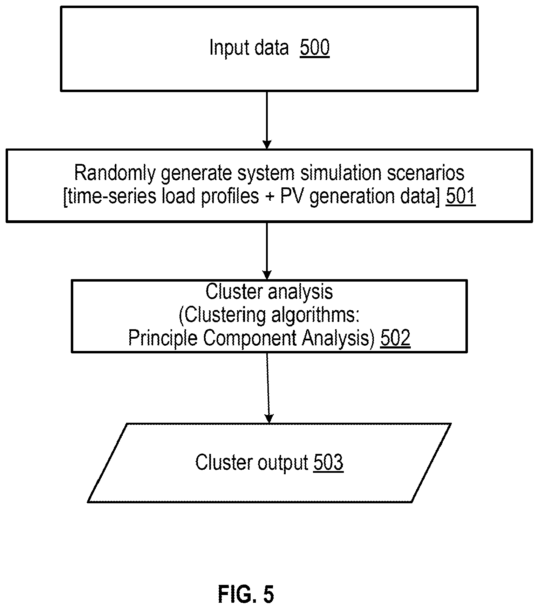

FIG. 5 illustrate the general procedure of scenario management 204, in accordance with an example implementation. First, the input data such as the planning data 220 (e.g. stochastic system load profile 221, load profiles 221, Renewable Energy (RE) generation profiles 222, grid codes 223, and so on in accordance with the desired implementation) is received at 500, are used to randomly generate a variety of testing scenarios at 501. Secondly, the randomly generated data set can be processed using principle component analysis at 502, and scenarios that are found to have similar principle components are grouped into the same cluster. Different clustering algorithms can also be applied here (e.g. k-means, fuzzy c-means, and hierarchical clustering, and so on) can be used in accordance with the desired implementation. Finally, for each cluster several representative scenarios can be selected to represent the whole cluster and their probability of occurrence can also be computed, which can be provided as the output at 503. Generally, the scenario management module allows for the representation of the massive dataset using limited representatives from different clusters.

With regards to the dynamic performance evaluation 206, this module is used to calculate dynamic performance evaluation metrics adaptively to address the impacts of DERs on distribution network. There are two types of performance index being considered; the snapshot performance index or the variable-width sliding window performance index.

With regards to the snapshot performance index, no time-correlation is considered; the snapshot performance index refers to system operation measurement at each time instant (e.g. instantaneous node voltage, instantaneous line current, and so on). The measurement will be checked with a pre-defined threshold to detect if system operation limit is reached (e.g. whether the node voltage is within operation limit).

The variable-width sliding window will avoid the false violation detection caused by some instantaneous measurement outlier. The sliding window length varies, depending on testing scenarios, or on specific component reliability requirement, or so on. In an example involving a rule-based dynamic performance indexing mechanism, in which when the PV output is at its peak level, the sliding window is adjusted to a smaller length to provide a zoom-in observation of system performance under short-duration PV peak generation.

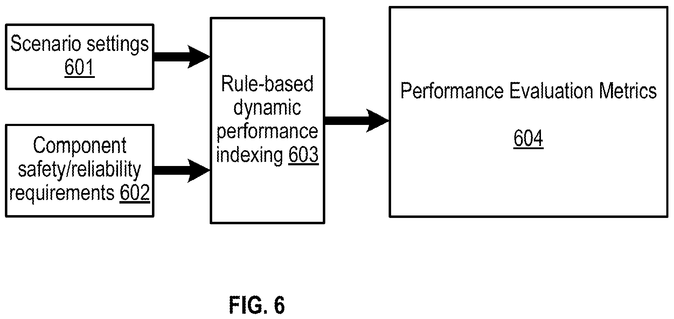

FIG. 6 illustrates the diagram of the dynamic performance evaluation mechanism 206, in accordance with an example implementation. At first the scenario settings 601 and the component safety/reliability requirements 602 are provided as input. The scenario settings 601 can involve planning data 220 as input such as load profiles 221, Renewable Energy (RE) power profiles 222, grid codes 223, and so on in accordance with the desired implementation The component safety/reliability requirements 602 can include, but are not limited to, operation requirements of transformers, lines, and so on in accordance with an example implementation. Such input is provided in the rule-based dynamic performance indexing 603 which processes the input to provide performance evaluation metrics 604. Performance evaluation metrics 604 can involve snapshot performance metrics such as instantaneous node voltage, and/or sliding window performance metrics such as 5-min average line loading, 2-min average transformer loading, and so on in accordance with the desired implementation.

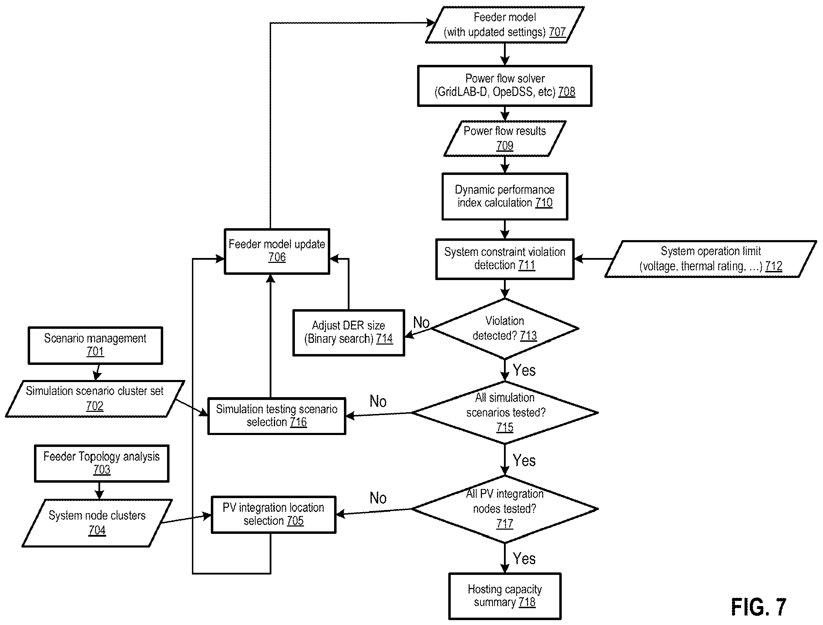

FIG. 7 illustrates the flowchart for the dynamic host capacity analysis process, in accordance with an example implementation. The HCA workflow manager is a time series workflow manager 207 that coordinates the interaction among different functional module in FIG. 2 to perform the system-wide hosting capacity analysis, which can be used to provide the time-series hosting capacity summary 209.

The flow begins with scenario management 701 which executes the flow of FIG. 5 to randomly generate system simulation scenarios and clustering to produce the simulation scenario cluster set 702. The simulation scenario cluster set 702 is fed into the simulation testing scenario selection to select the simulation scenarios for the feeder model update 706 as described with respect to the scenario management 204. For the feeder topology analysis 703, to facilitate DER integration location selection, the feeder topology analysis module groups or divides the feeder nodes onto different clusters based on their similar characteristics on DER system integration. Given the assumption that the clustered nodes have similar integration impact on the system, representative nodes from each cluster are selected as integration locations for hosting capacity analysis.

The system node clusters 704 are provided to the PV integration location selection 705 as described with respect to FIG. 3, wherein the selected integration locations are provided to the feeder model update 706 to update the model. The feeder model update 706 updates the feeder model 707 with the updated settings. Once the feeder model 707 is updated, the power flow solver 708 which executes QSTS simulation using the power flow tools in accordance with the desired implementation. The time-series simulation can provide an accurate estimation of the system status. The output of the simulation is the power flow results 709. Power flow results 709 are related to default contents in power industry, including but not limited to node voltages, line current, and so on depending on the desired implementation.

The power flow results 709 are provided to the dynamic performance index calculation 710 to determine performance as well as system constraint violations 711. The system constraint violation detection 711 can be set for any system operation performance metric in accordance with the desired implementation through the provision of the system operation limits 712, which are calculated though the dynamic performance index calculation 710. For example, if system node voltage (p.u.) is used as performance metric, when any system node voltage is violating the limit (0.95 p.u.- 1.05 p.u.), the maximum integration capacity is recorded under this operation criteria. Examples of system operation limits 712 can include, but are not limited to, voltage, thermal rating, and so on.

At 713 a determination is made as to whether a violation is detected based on the system constraints. If no, then the flow proceeds to 714 to adjust the DER size, otherwise (Yes), the flow proceeds to 715. With regards to adjusting the DER size 714, the binary searching approach is used to increase the computational efficiency compared with linear size adjustment. The adjustments to the DER size are provided to the feeder update 706 to update the feeder model.

At 715, a determination is made as to whether all of the simulation testing scenarios have been tested. If so (Yes), then the flow proceeds to 717, otherwise (No) the flow proceeds to 716 to select a scenario for the simulation testing. For the simulation testing scenario selection 716, the scenario management module generates limited representative clusters from the massive stochastic data set. The representative testing scenario can be selected from each clustering group. Each testing scenario can refer to one set of system load profiles and PV generation profiles to be applied on the feeder model for the simulation study through feeder update 706.

At 717, a determination is made as to whether all of the PV integration nodes have been tested. If so (Yes), then the flow proceeds to provide the host capacity summary 718, otherwise (No) the flow proceeds back to 705 to conduct a PV integration selection for the next PV integration node. For the host capacity analysis results provided by the host capacity summary 718, the contents can include, but is not limited to, maximum allowable DERs (e.g. PV) installation capacity that can be accommodated on specific distribution system nodes without violating certain system operation constraints.

Example implementations as described herein involve a distribution system planning tool to support DER interconnection review procedures for distribution network operators (DNOs), a distribution system management tool to serve DNOs in monitoring and maintaining distribution system reliability and efficiency, a distribution system assessment framework for DER integration impact study, and a decision supporting tool for real-time ADMS (advanced distribution management system).

Through the time-series power flow simulation as described herein, the time-dependent DER dynamics and system dynamics are well modelled and simulated in the proposed HCA process. Further, through the scenario management module and feeder topology analysis module, the searching dimension are greatly reduced to improve the computational efficiency. The HCA framework as described herein can thereby provide a flexible interface with real-world measurements, and the design of efficient and flexible performance evaluation indices can well address time-dependent system dynamic behavior.

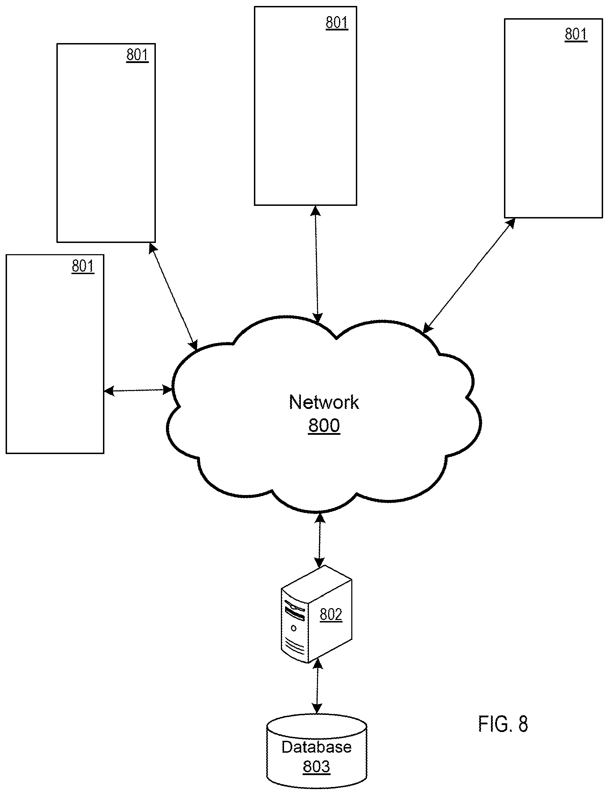

FIG. 8 illustrates a system involving a plurality of DER nodes to a management apparatus, in accordance with an example implementation. One or more DER nodes 801 are communicatively coupled to a network 800 (e.g., local area network (LAN), wide area network (WAN)) through the corresponding on-board computer or Internet of Things (IoT) device of the DER nodes 801, which is connected to a management apparatus 802. The management apparatus 802 manages a database 803, which contains historical data collected from the inspection systems 801 and also facilitates remote control to each of the inspection systems 801. In alternate example implementations, the data from the inspection systems can be stored to a central repository or central database such as proprietary databases that intake data, or systems such as enterprise resource planning systems, and the management apparatus 802 can access or retrieve the data from the central repository or central database. DER nodes 801 can involve any monitored physical system of the distributed energy resources in accordance with the desired implementation, such as but not limited to solar panel systems, smart grid systems for residential systems, hydroelectric turbines, wind turbines, and so on in accordance with the desired implementation.

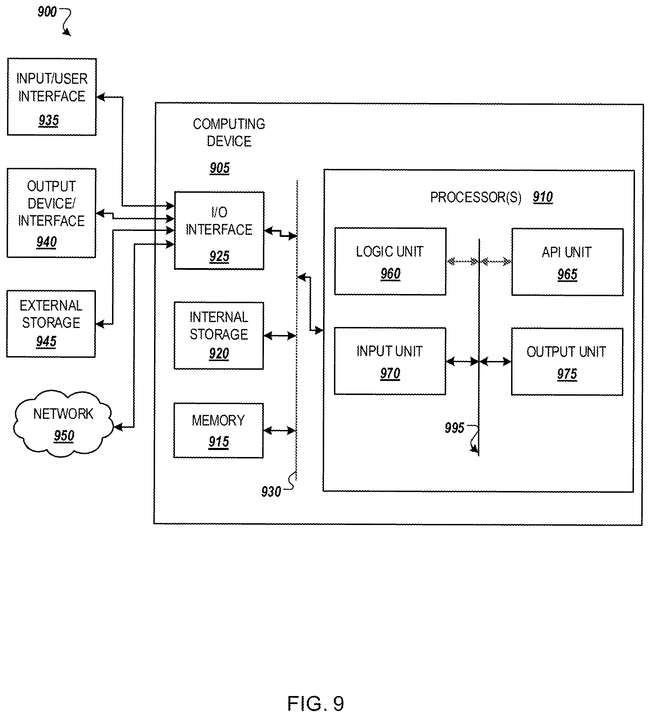

FIG. 9 illustrates an example computing environment with an example computer device suitable for use in some example implementations, such as a management apparatus 802 as illustrated in FIG. 8, or as an on-board computer for a DER node 801. Computer device 905 in computing environment 900 can include one or more processing units, cores, or processors 910, memory 915 (e.g., RAM, ROM, and/or the like), internal storage 920 (e.g., magnetic, optical, solid state storage, and/or organic), and/or I/O interface 925, any of which can be coupled on a communication mechanism or bus 930 for communicating information or embedded in the computer device 905. I/O interface 925 is also configured to receive images from cameras or provide images to projectors or displays, depending on the desired implementation.

Computer device 905 can be communicatively coupled to input/user interface 935 and output device/interface 940. Either one or both of input/user interface 935 and output device/interface 940 can be a wired or wireless interface and can be detachable. Input/user interface 935 may include any device, component, sensor, or interface, physical or virtual, that can be used to provide input (e.g., buttons, touch-screen interface, keyboard, a pointing/cursor control, microphone, camera, braille, motion sensor, optical reader, and/or the like). Output device/interface 940 may include a display, television, monitor, printer, speaker, braille, or the like. In some example implementations, input/user interface 935 and output device/interface 940 can be embedded with or physically coupled to the computer device 905. In other example implementations, other computer devices may function as or provide the functions of input/user interface 935 and output device/interface 940 for a computer device 905.

Examples of computer device 905 may include, but are not limited to, highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 905 can be communicatively coupled (e.g., via I/O interface 925) to external storage 945 and network 950 for communicating with any number of networked components, devices, and systems, including one or more computer devices of the same or different configuration. Computer device 905 or any connected computer device can be functioning as, providing services of, or referred to as a server, client, thin server, general machine, special-purpose machine, or another label.

I/O interface 925 can include, but is not limited to, wired and/or wireless interfaces using any communication or I/O protocols or standards (e.g., Ethernet, 802.11x, Universal System Bus, WiMax, modem, a cellular network protocol, and the like) for communicating information to and/or from at least all the connected components, devices, and network in computing environment 900. Network 950 can be any network or combination of networks (e.g., the Internet, local area network, wide area network, a telephonic network, a cellular network, satellite network, and the like).

Computer device 905 can use and/or communicate using computer-usable or computer-readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid state media (e.g., RAM, ROM, flash memory, solid-state storage), and other non-volatile storage or memory.

Computer device 905 can be used to implement techniques, methods, applications, processes, or computer-executable instructions in some example computing environments. Computer-executable instructions can be retrieved from transitory media, and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 910 can execute under any operating system (OS) (not shown), in a native or virtual environment. One or more applications can be deployed that include logic unit 960, application programming interface (API) unit 965, input unit 970, output unit 975, and inter-unit communication mechanism 995 for the different units to communicate with each other, with the OS, and with other applications (not shown). The described units and elements can be varied in design, function, configuration, or implementation and are not limited to the descriptions provided. Processor(s) 910 can be in the form of hardware processors such as central processing units (CPUs) or in a combination of hardware and software units.

In some example implementations, when information or an execution instruction is received by API unit 965, it may be communicated to one or more other units (e.g., logic unit 960, input unit 970, output unit 975). In some instances, logic unit 960 may be configured to control the information flow among the units and direct the services provided by API unit 965, input unit 970, output unit 975, in some example implementations described above. For example, the flow of one or more processes or implementations may be controlled by logic unit 960 alone or in conjunction with API unit 965. The input unit 970 may be configured to obtain input for the calculations described in the example implementations, and the output unit 975 may be configured to provide output based on the calculations described in example implementations.

In a first aspect, processor(s) 910 can be configured to execute computer instructions to facilitate a method, which can involve receiving data input involving system profiles and topology information of a distribution system comprising a plurality of distributed energy resource (DER) nodes in an interconnect; executing feeder topology analysis on the topology information to generate output analysis; executing scenario management on the system profiles to generate simulation scenario sets; and loading and executing a simulation flow from the simulation scenario sets and the output analysis as illustrated in FIG. 2.

In a second aspect, processor(s) 910 can be configured to execute computer instructions to facilitate the method for the executing the feeder topology analysis by of the first aspect executing clustering on the topology information to determine feeder system node clustering; and providing the feeder system node clustering as an initial one of the output analysis as illustrated in 300 and 301 of FIG. 3. For the execution of the simulation flow from the simulation scenario sets and the output analysis as illustrated at 304 of FIG. 3, processor(s) 910 can be configured to execute the computer instructions to facilitate the method of the first aspect and further involve evaluating the feeder system node clustering from power flow simulation provided from the simulation flow; adjusting partitioning of feeder system nodes based on the evaluation; and providing the adjusted partitioning of feeder system nodes as the output analysis as illustrated at 302 and 303 of FIG. 3.

In a third aspect, processor(s) 910 can be configured to execute computer instructions to facilitate a method as in the above aspects, wherein the executing the scenario management involves randomly generating simulation scenarios from combinations of ones of the system profiles, the system profiles comprising time-series system load profiles and generation profiles of the plurality of DER nodes; and executing clustering on the generated simulation scenarios to generate simulation scenario sets as illustrated in FIG. 5.

In a fourth aspect, processor(s) 910 can be configured to execute computer instructions for facilitating a method as in the above aspects, and further involve monitoring system power flow from the execution of the simulation flow; and for a detection of a constraint violation in the monitored power flow, noting the constraint violation for hosting capacity output and changing the simulation flow to another simulation flow from the simulation scenario sets as illustrated from 708 to 714 of FIG. 7.

In a fifth aspect, processor(s) 910 can be configured execute computer instructions for facilitating a method as in the above aspects, further involving for execution of the all simulation flows from the simulation scenario sets, providing the hosting capacity output as illustrated at 715 to 718 of FIG. 7.

In a sixth aspect, processor(s) 910 can be configured execute computer instructions for facilitating a method as in the above aspects, further involving executing a snapshot of performance metrics of the simulation flow to determine whether a constraint violation has occurred; and utilizing a variable-width sliding window on the determined constraint violations to determine whether the constraint violation is false as illustrated at FIGS. 5 and 6.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer-readable storage medium or a computer-readable signal medium. A computer-readable storage medium may involve tangible mediums such as, but not limited to optical disks, magnetic disks, read-only memories, random access memories, solid state devices and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the teachings of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general purpose computer, based on instructions stored on a computer-readable medium. If desired, the instructions can be stored on the medium in a compressed and/or encrypted format.

Moreover, other implementations of the present application will be apparent to those skilled in the art from consideration of the specification and practice of the teachings of the present application. Various aspects and/or components of the described example implementations may be used singly or in any combination. It is intended that the specification and example implementations be considered as examples only, with the true scope and spirit of the present application being indicated by the following claims.

## Claims

1. A method, comprising:
receiving data input comprising system profiles and topology information of a distribution system comprising a plurality of distributed energy resource (DER) nodes in an interconnect;
executing feeder topology analysis on the topology information to generate output analysis;
executing scenario management on the system profiles to generate simulation scenario sets; and
loading and executing a simulation flow from the simulation scenario sets and the output analysis.

2. The method of claim 1, wherein the executing the feeder topology analysis comprises:
executing clustering on the topology information to determine feeder system node clustering; and
providing the feeder system node clustering as an initial one of the output analysis;
for the execution of the simulation flow from the simulation scenario sets and the output analysis:
evaluating the feeder system node clustering from power flow simulation provided from the simulation flow;
adjusting feeder system node partitioning based on the evaluation; and
providing the adjusted partitioning of feeder system nodes as the output analysis.

3. The method of claim 1, wherein the executing the scenario management comprises:
randomly generating simulation scenarios from combinations of ones of the system profiles, the system profiles comprising time-series system load profiles and generation profiles of the plurality of DER nodes; and
executing clustering on the generated simulation scenarios to generate simulation scenario sets.

4. The method of claim 1, further comprising:
monitoring system power flow with the plurality of DER nodes on the interconnect from the execution of the simulation flow; and
for a detection of a constraint violation in the monitored power flow, noting the constraint violation for hosting capacity output and changing the simulation flow to another simulation flow from the simulation scenario sets.

5. The method of claim 4, further comprising, for execution of the all simulation flows from the simulation scenario sets, providing the hosting capacity output.

6. The method of claim 1, further comprising:
executing a snapshot of performance metrics of the simulation flow to determine whether a constraint violation has occurred; and
utilizing a variable-width sliding window on the determined constraint violations to determine whether the constraint violation is false.

7. A non-transitory computer readable medium, storing instructions for executing a process, the instructions comprising:
receiving data input comprising system profiles and topology information of a distribution system comprising a plurality of distributed energy resource (DER) nodes in an interconnect;
executing feeder topology analysis on the topology information to generate output analysis;
executing scenario management on the system profiles to generate simulation scenario sets; and
loading and executing a simulation flow from the simulation scenario sets and the output analysis.

8. The non-transitory computer readable medium of claim 7, wherein the executing the feeder topology analysis comprises:
executing clustering on the topology information to determine feeder system node clustering; and
providing the feeder system node clustering as an initial one of the output analysis;
for the execution of the simulation flow from the simulation scenario sets and the output analysis:
evaluating the feeder system node clustering from power flow simulation provided from the simulation flow;
adjusting partitioning feeder system nodes based on the evaluation; and
providing the adjusted feeder system node partitioning as the output analysis.

9. The non-transitory computer readable medium of claim 7, wherein the executing the scenario management comprises:
randomly generating simulation scenarios from combinations of ones of the system profiles, the system profiles comprising time-series system load profiles and generation profiles of the plurality of DER nodes; and
executing clustering on the generated simulation scenarios to generate simulation scenario sets.

10. The non-transitory computer readable medium of claim 7, further comprising:
monitoring system power flow with the plurality of DER nodes in the interconnect from the execution of the simulation flow; and
for a detection of a constraint violation in the monitored power flow, noting the constraint violation for hosting capacity output and changing the simulation flow to another simulation flow from the simulation scenario sets.

11. The non-transitory computer readable medium of claim 10, further comprising, for execution of the all simulation flows from the simulation scenario sets, providing the hosting capacity output.

12. The non-transitory computer readable medium of claim 7, further comprising:
executing a snapshot of performance metrics of the simulation flow to determine whether a constraint violation has occurred; and
utilizing a variable-width sliding window on the determined constraint violations to determine whether the constraint violation is false.

13. A management apparatus configured to manage a distribution system over a network, the distribution system comprising a plurality of distributed energy resource (DER) nodes in an interconnect, the apparatus comprising:
a processor, configured to:
receive data input comprising system profiles and topology information of the distribution system comprising a plurality of distributed energy resource (DER) nodes in an interconnect;
execute feeder topology analysis on the topology information to generate output analysis;
execute scenario management on the system profiles to generate simulation scenario sets; and
load and execute a simulation flow from the simulation scenario sets and the output analysis.

14. The apparatus of claim 13, wherein the processor is configured to execute the feeder topology analysis by:
executing clustering on the topology information to determine system node clustering; and
providing the system node clustering as an initial one of the output analysis;
for the execution of the simulation flow from the simulation scenario sets and the output analysis:
evaluating the system node clustering from power flow simulation provided from the simulation flow;
adjusting system node partitioning based on the evaluation; and
providing the adjusted system node partitioning as the output analysis.

15. The apparatus of claim 13, wherein the processor is configured to execute the scenario management by:
randomly generating simulation scenarios from combinations of ones of the system profiles, the system profiles comprising time-series system load profiles and generation profiles of the plurality of DER nodes; and
executing clustering on the generated simulation scenarios to generate simulation scenario sets.

16. The apparatus of claim 13, wherein the processor is configured to:
monitor system power flow with the plurality of DER nodes in the interconnect from the execution of the simulation flow; and
for a detection of a constraint violation in the monitored power flow, noting the constraint violation for hosting capacity output and changing the simulation flow to another simulation flow from the simulation scenario sets.

17. The apparatus of claim 13, wherein the processor is configured to, for execution of the all simulation flows from the simulation scenario sets, providing the hosting capacity output.

18. The apparatus of claim 13, wherein the processor is configured to:
executing a snapshot of performance metrics of the simulation flow to determine whether a constraint violation has occurred; and
utilizing a variable-width sliding window on the determined constraint violations to determine whether the constraint violation is false.
